# EUROPÄISCHE PATENTANMELDUNG

(11) **EP 4 711 645 A1**
(43) Veröffentlichungstag der Anmeldung: **18.03.2026**
(21) Anmeldenummer: 25196787.3
(22) Anmeldetag: 19.08.2025
(51) Int. Cl.: F16H 61/431, F16H 61/46

(54) **ANTRIEBSSYSTEM FÜR EIN ARBEITSFAHRZEUG**

(30) Priorität: 13.09.2024 AT 5011924 U
(71) Anmelder: Palfinger AG, 5101 Bergheim (AT)
(72) Erfinder: Rosenhammer, Christian, 5101 Bergheim bei Salzburg (AT); Haslauer, Mario, 5101 Bergheim bei Salzburg (AT)
(74) Vertreter: Torggler & Hofmann Patentanwälte - Innsbruck

(57) **Zusammenfassung**

Antriebssystem (1) für ein Arbeitsfahrzeug, beispielsweise Mitnahmestapler, mit wenigstens einem angetriebenen Rad (14), wobei das Antriebssystem (1)
- eine Hydraulikpumpe (11), welche zum Antreiben des wenigstens einen angetriebenen Rads (14) ausgebildet ist, und
- einen mechanisch mit der Hydraulikpumpe (11) gekoppelten Elektromotor (10), welcher zum Antreiben der Hydraulikpumpe (11) ausgebildet ist,
umfasst, wobei die Hydraulikpumpe (11) eine Verstellpumpe ist.

## Beschreibung

Die vorliegende Erfindung betrifft ein Antriebssystem für ein Arbeitsfahrzeug, beispielsweise Mitnahmestapler, mit wenigstens einem angetriebenen Rad, wobei das Antriebssystem
- eine Hydraulikpumpe, welche zum Antreiben des wenigstens einen angetriebenen Rads ausgebildet ist, und
- einen mechanisch mit der Hydraulikpumpe gekoppelten Elektromotor, welcher zum Antreiben der Hydraulikpumpe ausgebildet ist,
umfasst.

Des Weiteren betrifft die Erfindung ein Arbeitsfahrzeug mit einem solchen Antriebssystem und ein Verfahren zum Betreiben eines derartigen Antriebssystems oder Arbeitsfahrzeugs.

Antriebssysteme dieser Art finden ihren Einsatz vor allem bei kompakten elektrischen Arbeitsfahrzeugen, wie Staplern, Baggern oder dergleichen, wobei sie insbesondere für den Fahrantrieb bzw. das Antreiben der Räder, wie z.B. bereifter Räder oder auch der Antriebsräder eines Raupenantriebs, vorgesehen sind. Solche elektrischen Arbeitsfahrzeuge sollten dabei möglichst kompakt ausgebildet sein und energieeffizient betrieben werden können. Die EP 3722516 A1 bietet hierzu einen Ansatz, bei welchem einerseits zwei getrennte Antriebsstränge für die Fahrhydraulik und die Arbeitshydraulik vorgesehen sind und wobei andererseits der Antriebsstrang der Fahrhydraulik dazu ausgebildet ist, die Drehung einer Konstantpumpe direkt proportional auf die Räder zu übertragen.

Nachteilig an einem derart ausgebildeten Fahrhydraulik-Antriebsstrang ist, dass dieser Antriebsstrang keinerlei andere Verbraucher bedienen kann, da sonst die direkte Übertragung von der Pumpe auf die Räder nicht mehr gegeben wäre. Da die Konstantpumpe hier außerdem durch einen daran mechanisch gekoppelten Elektromotor angetrieben wird, ist es zwingend notwendig, den Elektromotor mit einer Drehzahl entsprechend einer gewünschten Bewegung der Räder zu betreiben. Dabei kann es unter Umständen vorkommen, dass der Elektromotor in einem für ihn ungünstigen Betriebszustand betrieben werden muss. Möglicherweise wird die Bewegung der Räder auch übermäßig durch eine maximale Motordrehzahl begrenzt.

Die Aufgabe der vorliegenden Erfindung ist es daher, ein zum Stand der Technik verbessertes Antriebssystem bereitzustellen, welches flexibler eingesetzt und betrieben werden kann und dadurch z.B. einen schonenderen Betrieb des Elektromotors erlaubt.

Diese Aufgabe wird durch die Merkmale des Anspruchs 1 gelöst, nämlich mit einem Antriebssystem der eingangs genannten Art, bei welchem die Hydraulikpumpe eine Verstellpumpe ist.

Der Einsatz einer Verstellpumpe ermöglicht es, dass das wenigstens eine angetriebene Rad sowohl mittels der Hydraulikpumpe als auch mittels des Elektromotors gesteuert oder geregelt werden kann. Anders ausgedrückt, hängt die Bewegung des wenigstens einen angetriebenen Rads vorteilhafterweise nicht ausschließlich von einer Drehzahl und/oder Drehrichtung des Elektromotors ab.

Das erfindungsgemäße Antriebssystem ist dadurch deutlich flexibler als jenes des Stands der Technik. Beispielsweise kann das Antriebssystem weitere Verbraucher versorgen oder den Elektromotor in einem für ihn günstigen, d.h. insbesondere materialschonenden und energiesparenden, Betriebszustand zu betreiben.

Die Verstellpumpe ist vorzugsweise eine Axialkolbenpumpe mit einer Verstelleinheit, vorzugsweise einer Schwenkscheibe.

Das anzutreibende wenigstens eine angetriebene Rad des Arbeitsfahrzeugs ist vorzugsweise ein bereiftes Rad.

Das wenigstens eine angetriebene Rad kann auch ein Antriebsrad eines Raupenantriebs sein. Es kann auch eine Antriebseinheit eines Raupenantriebs sein.

Weitere vorteilhafte Ausführungsformen der Erfindung werden in den abhängigen Ansprüchen definiert.

In besonders bevorzugten Ausführungsbeispielen weist das Antriebssystem eine Steuer- oder Regeleinheit auf, welche dazu ausgebildet ist, den Elektromotor und die Hydraulikpumpe, insbesondere eine Verstelleinheit wie eine Schwenkscheibe der Hydraulikpumpe, zu steuern oder zu regeln. Dadurch lässt sich die Bewegung des wenigstens einen angetriebenen Rads, insbesondere dessen Drehrichtung und/oder dessen Rotationsgeschwindigkeit, besonders präzise steuern oder regeln.

Die Steuerung oder Regelung des Elektromotors und der Hydraulikpumpe muss dabei nicht zwingend gleichzeitig erfolgen.

Die Steuer- oder Regeleinheit ist bevorzugt dazu ausgebildet, eine gewünschte Bewegung des wenigstens einen angetriebenen Rads primär durch Steuern oder Regeln der Hydraulikpumpe, insbesondere der Verstelleinheit, und sekundär durch Steuern oder Regeln des Elektromotors zu bewirken.

Vorzugsweise ist die Steuer- oder Regeleinheit dazu ausgebildet, den Elektromotor in Abhängigkeit eines Zustands der Hydraulikpumpe und die Hydraulikpumpe in Abhängigkeit eines Zustands des Elektromotors zu steuern oder zu regeln.

In einer besonders bevorzugten Ausführungsvariante ist das Antriebssystem dazu ausgebildet, eine Drehrichtung des Elektromotors beizubehalten und die durch die Hydraulikpumpe erzeugbare Strömungsrichtung mittels der Hydraulikpumpe selbst, insbesondere mittels der Verstelleinheit, zu steuern oder zu regeln.

Die Strömungsrichtung innerhalb des Antriebssystems, vorzugsweise des ersten Antriebsstrangs wird also vorzugsweise durch ein Steuern oder Regeln der Durchflussrichtung der Hydraulikpumpe bestimmt.

Es ist möglich, dass die Steuer- oder Regeleinheit dazu ausgebildet ist, eine Drehzahl des Elektromotors in einem definierten Bereich zu halten und die Hydraulikpumpe, insbesondere die Verstelleinheit, derart zu steuern oder zu regeln, dass die gewünschte Bewegung des wenigstens einen angetriebenen Rads generiert wird. So kann der Elektromotor besonders gut in einem Drehzahlbereich betrieben werden, welcher energiesparend und/oder materialschonend ist.

Es ist bevorzugt vorgesehen, dass die Steuer- oder Regeleinheit dazu ausgebildet ist, einen durch die Hydraulikpumpe generierbaren Volumenstrom anhand einer Drehzahl der Hydraulikpumpe und/oder einem Verdrängungsvolumen je Umdrehung der Hydraulikpumpe zu steuern oder zu regeln.

In besonders bevorzugten Ausführungsbeispielen ist es vorgesehen, dass das Antriebssystem wenigstens einen mit der Hydraulikpumpe fluidverbundenen Hydraulikmotor aufweist, welcher dazu ausgebildet ist, von der Hydraulikpumpe angetrieben zu werden und das wenigstens eine angetriebene Rad anzutreiben.

Es kann vorgesehen sein, dass zumindest der Elektromotor und die Hydraulikpumpe einen ersten hydraulischen Antriebsstrang zum Antreiben des wenigstens einen angetriebenen Rads bilden.

In bevorzugten Ausführungsbeispielen sind zusätzlich zum wenigstens einen angetriebenen Rad wenigstens zwei, beispielsweise drei oder vier, Räder vorgesehen, vorzugsweise wobei jedem Rad ein Hydraulikmotor vorgeordnet ist.

In besonders bevorzugten Ausführungsbeispielen ist der erste Antriebsstrang ein geschlossener Hydraulikreislauf. So können z.B. besonders gut höhere Rotationsgeschwindigkeiten des wenigstens einen angetriebenen Rads erzeugt werden. So kann z. B. die Drehrichtung des mindestens einen angetriebenen Rades durch Umkehrung der Flussrichtung des Hydraulikfluides geändert werden, ohne dass es zu Leistungseinbußen im Hydraulikkreislauf kommt.

Es ist besonders bevorzugt vorgesehen, dass das Antriebssystem eine, vorzugsweise mit der Hydraulikpumpe mechanisch gekoppelte, Speisepumpe aufweist, welche dazu ausgebildet ist, einen vorgesehenen Betriebsdruck im Antriebssystem, vorzugsweise im ersten Antriebsstrang, bereitzustellen und aufrechtzuerhalten.

In bevorzugten Ausführungsbeispielen weist das Antriebssystem, vorzugsweise der erste Antriebsstrang, eine Bremseinheit, vorzugsweise umfassend wenigstens einen Bremshydraulikzylinder, auf, wobei die Bremseinheit dazu ausgebildet ist, wenigstens ein Rad zu bremsen und/oder zu blockieren.

Die Bremseinheit ist vorzugsweise dazu ausgebildet, einen dem wenigstens einen angetriebenen Rad vorgeordneten Hydraulikmotor zu bremsen und/oder zu blockieren.

Die Bremseinheit kann dazu ausgebildet sein, mehrere oder alle Räder oder deren vorgeordnete Hydraulikmotoren zu bremsen und/oder zu blockieren.

Das Antriebssystem weist vorzugsweise wenigstens einen zweiten hydraulischen Antriebsstrang mit einem zweiten Elektromotor und mit einer mit dem zweiten Elektromotor mechanisch gekoppelten zweiten Hydraulikpumpe auf, wobei die zweite Hydraulikpumpe zum Antreiben wenigstens eines Verbrauchers des Arbeitsfahrzeugs ausgebildet ist.

Der zweite Antriebsstrang ist vorzugsweise als ein Arbeitshydraulikstrang zu verstehen.

Der wenigstens eine Verbraucher ist insbesondere ein hydraulischer Verbraucher, insbesondere ein Hydraulikzylinder.

Ist das Arbeitsfahrzeug ein Mitnahmestapler oder dergleichen, dann ist der wenigstens eine Verbraucher vorzugsweise fünf Verbraucher, welcher zum Betrieb eines Gabelträgers und einer Abstützeinrichtung des Staplers vorgesehen ist, insbesondere wobei jeweils ein Verbraucher für die Funktionen Heben und Senken, Reichweite erhöhen und reduzieren, nach oben und unten Neigen, nach links und rechts Verschieben des Gabelträgers und ein Bewegen einer Abstützeinrichtung nach unten und oben zuständig ist.

In bevorzugten Ausführungsbeispielen ist die zweite Hydraulikpumpe zum Antreiben des wenigstens einen Verbrauchers eine Einwegepumpe.

Es ist besonders bevorzugt vorgesehen, dass die Steuer- oder Regeleinheit dazu ausgebildet ist, einen durch die wenigstens eine zweite Hydraulikpumpe generierbaren Volumenstrom, vorzugsweise auf Anforderung des wenigstens einen Verbrauchers, zu steuern oder zu regeln.

Es kann vorgesehen sein, dass der Elektromotor und/oder der zweite Elektromotor dazu ausgebildet ist oder sind, auf wenigstens ein durch die Anforderung des wenigstens einen Verbrauchers erzeugtes Signal gesteuert oder geregelt zu werden.

Das wenigstens eine Signal kann ein mechanisches oder elektrisches oder hydraulisches Signal sein. Das wenigstens eine Signal kann mittels einer Signalumwandlung umgewandelt und/oder erhalten werden.

Es kann vorgesehen sein, dass die Steuer- oder Regeleinheit dazu ausgebildet ist, die Hydraulikpumpe und/oder den Elektromotor und/oder die zweite Hydraulikpumpe und/oder den zweiten Elektromotor derart zu steuern oder zu regeln, dass ein variabler und/oder konstanter Volumenstrom generiert wird.

Es ist möglich, dass ausschließlich ein variabler Volumenstrom oder ausschließlich ein konstanter Volumenstrom generiert wird.

Es ist auch möglich, dass der Volumenstrom ein eine Überlagerung eines variablen und eines konstanten Volumenstroms ist und/oder dass abwechselnd ein variabler und ein konstanter Volumenstrom generiert werden.

In besonders bevorzugten Ausführungsbeispielen ist die zweite Hydraulikpumpe eine Konstantpumpe mit einem konstanten Verdrängungsvolumen je Umdrehung der Hydraulikpumpe, vorzugsweise wobei die Steuer- oder Regeleinheit dazu ausgebildet ist, den Volumenstrom anhand der Drehzahl der zweiten Hydraulikpumpe zu steuern oder zu regeln.

Besonders bevorzugt ist die Steuer- oder Regeleinheit dazu ausgebildet, den zweiten Elektromotor, vorzugsweise eine Drehzahl des zweiten Elektromotors und/oder auf Grundlage wenigstens einer Anforderung einer oder mehrerer Verbraucher, zu steuern oder zu regeln.

Alternativ kann die zweite Hydraulikpumpe eine Verstellpumpe sein, vorzugsweise wobei die Steuer- oder Regeleinheit dazu ausgebildet ist, den Volumenstrom anhand eines Verstellparameters wie eines Schwenkwinkels und/oder einer Drehzahl der zweiten Hydraulikpumpe zu steuern oder zu regeln.

In bevorzugten Ausführungsbeispielen ist die Steuer- oder Regeleinheit dazu ausgebildet, den Elektromotor und/oder die Hydraulikpumpe und/oder den zweiten Elektromotor und/oder die zweite Hydraulikpumpe durch wenigstens eine Funktionsanforderung durch eine Bedienperson, vorzugsweise in Echtzeit, zu steuern oder zu regeln.

Die wenigstens eine angeforderte Funktion ist insbesondere das Bewegen des wenigstens einen angetriebenen Rads, z.B. mit einer gewünschten Geschwindigkeit und/oder Drehzahl und in eine erste Richtung oder in eine zweite Richtung.

Die wenigstens eine Funktionsanforderung kann z.B. durch das Betätigen eines Pedals, Hebels und/oder Tasters etc. durch eine Bedienperson erfolgen, wobei das Betätigen in oder am Arbeitsfahrzeug und/oder auch ferngesteuert erfolgen kann.

Es ist auch denkbar, dass die Funktionsanforderung durch ein autonomes System etc. erfolgen kann.

Das Antriebssystem kann wenigstens ein Druckbegrenzungsventil umfassen, insbesondere wobei das wenigstens eine Druckbegrenzungsventil dem wenigstens einen angetriebenen Rad, vorzugsweise dem wenigstens einen Hydraulikmotor, und/oder dem wenigstens einen Verbraucher vorgeordnet ist.

Im zweiten Antriebsstrang ist wenigstens ein, beispielsweise mittels eines Hebels betätigbares, Mehrwegeventil vorgesehen, insbesondere mittels welchem der wenigstens eine Verbraucher aktivierbar ist.

Der wenigstens eine zweite Antriebsstrang ist vorzugsweise ein offener Hydraulikkreislauf.

Es ist besonders bevorzugt vorgesehen, dass dem wenigstens einen Verbraucher im zweiten Antriebsstrang ein Primärverbraucher mit einem definierten Leistungsbedarf vorgeordnet ist, vorzugsweise wobei das Antriebssystem dazu ausgebildet ist, mittels einer Vorrichtung zur Regelung der priorisierten Energieversorgung dem Primärverbraucher eine Hydraulikfluidmenge zur Deckung seines definierten Leistungsbedarfs bereitzustellen.

Vorzugsweise ist der Primärverbraucher ein Hydraulikzylinder einer Lenkung des Arbeitsfahrzeugs. D. h. insbesondere, dass das Arbeitsfahrzeug immer zuverlässig und sicher gelenkt werden kann.

Besonders bevorzugt sind der erste Antriebsstrang und der wenigstens eine zweite Antriebsstrang getrennt voneinander, d.h. insbesondere hydraulisch unverbunden, ausgebildet.

Es ist aber auch denkbar, dass der erste Antriebsstrang und der wenigstens eine zweite Antriebsstrang hydraulisch miteinander verbunden sind, beispielsweise zu Zwecken eines Druckausgleichs.

Schutz wird weiters auch begehrt für ein Arbeitsfahrzeug, insbesondere Mitnahmestapler, mit einem erfindungsgemäßen Antriebssystem und wenigstens einem mit dem Antriebssystem antreibbaren Rad.

Das anzutreibende wenigstens eine angetriebene Rad des Arbeitsfahrzeugs ist vorzugsweise ein bereiftes Rad.

Das wenigstens eine angetriebene Rad kann auch ein Antriebsrad eines Raupenantriebs sein.

Besonders bevorzugt ist das Arbeitsfahrzeug ein Stapler mit drei oder vier Rädern und mit mehreren, vorzugsweise fünf, Verbrauchern zum Betreiben eines Gabelträgers und einer Abstützeinrichtung des Staplers, insbesondere wobei jeweils ein Verbraucher für die Funktionen Heben und Senken, Reichweite erhöhen und reduzieren, nach oben und unten neigen, nach links und rechts verschieben des Gabelträgers und ein Bewegen der Abstützeinrichtung nach unten und oben vorgesehen ist.

In besonders bevorzugten Ausführungsbeispielen umfasst das Antriebssystem, vorzugsweise des Arbeitsfahrzeugs, wenigstens eine Batterie zur Stromversorgung des Elektromotors und vorzugsweise des zweiten Elektromotors.

Schutz wird auch begehrt für ein Verfahren zum Betreiben eines erfindungsgemäßen Antriebssystems und/oder Arbeitsfahrzeugs, wobei der Elektromotor und die Hydraulikpumpe, insbesondere eine Schwenkscheibe der Hydraulikpumpe, gesteuert oder geregelt werden, um das wenigstens eine angetriebene Rad anzutreiben.

Weitere Vorteile der Erfindung ergeben sich aus den Figuren sowie der dazugehörigen Figurenbeschreibung. Dabei zeigen:
- Fig. 1-3: jeweils einen Abschnitt eines bevorzugten Ausführungsbeispiels eines erfindungsgemäßen Antriebssystems.

Die in den Fig. 1-3 gezeigten Abschnitte bilden zusammen das bevorzugte Ausführungsbeispiel eines erfindungsgemäßen Antriebssystems 1. Dabei ist in Fig. 1 ein Abschnitt des Antriebssystems 1 mit einem optionalen zweiten Antriebsstrang 7 und in Fig. 2 ein im zweiten Antriebsstrang 7 vorgesehener Primärverbraucher 8 gezeigt. In der Fig. 3 ist im Wesentlichen der Hauptabschnitt des Antriebssystems 1 mit einem ersten Antriebsstrang 9 gezeigt.

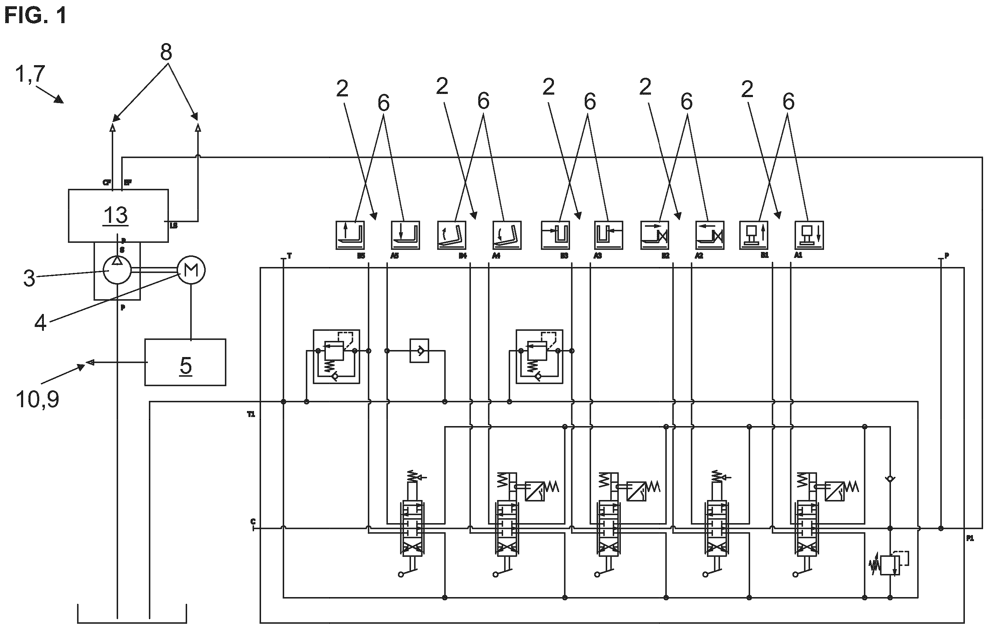

Die Fig. 1 zeigt also einen Abschnitt eines bevorzugten Ausführungsbeispiels eines Antriebssystems 1 für ein Arbeitsfahrzeug, beispielsweise Mitnahmestapler, mit wenigstens einem Verbraucher 2, wobei das Antriebssystem 1
- eine zweite Hydraulikpumpe 3, welche zum Antreiben des wenigstens einen Verbrauchers 2 ausgebildet ist,
- einen mechanisch mit der zweiten Hydraulikpumpe 3 gekoppelten zweiten Elektromotor 4, welcher zum Antreiben der zweiten Hydraulikpumpe 3 ausgebildet ist, und
- eine Steuer- oder Regeleinheit 5
umfasst.

Bei diesem Ausführungsbeispiel ist die Steuer- oder Regeleinheit 5 dazu ausgebildet, den zweiten Elektromotor 4 zu steuern oder zu regeln.

Hier bilden zumindest der zweite Elektromotor 4 und die zweite Hydraulikpumpe 3 einen zweiten hydraulischen Antriebsstrang 7, welcher zum Antreiben von wenigstens einem Verbraucher 2, hier konkret fünf Verbraucher 2, ausgebildet ist.

Die Verbraucher 2, vorzugsweise Hydraulikzylinder, selbst sind nicht gezeigt; diese würden an den nach oben hin auslaufenden Hydraulikleitungen anschließen. Gezeigt sind aber insgesamt fünf beispielhafte durch die Verbraucher 2 verwirklichbare Funktionen 6. Diese fünf Funktionen 6 sind, von links nach rechts: Heben und Senken eines Gabelträgers eines Arbeitsfahrzeugs, nach oben und unten neigen des Gabelträgers, nach links und rechts verschieben des Gabelträgers, Reichweite des Gabelträgers erhöhen und reduzieren und ein Bewegen einer Abstützeinrichtung nach unten und oben.

Bei diesem Ausführungsbeispiel ist die Steuer- oder Regeleinheit 5 dazu ausgebildet, den Volumenstrom auf Anforderung des wenigstens einen Verbrauchers 2, d.h. insbesondere auf Anforderung eines oder mehrerer Verbraucher 2 der fünf vorhandenen Verbraucher 2, zu steuern oder zu regeln.

Vorzugsweise entspricht die Anforderung des jeweiligen Verbrauchers 2 einem definierten maximalen Leistungsbedarf dieses Verbrauchers 2.

Da hier mehrere Verbraucher 2 vorhanden sind, ist die Steuer- oder Regelvorrichtung 5 vorzugsweise dazu ausgebildet, den Volumenstrom anhand einer Summe der einzelnen Anforderungen der wenigstens zwei Verbraucher 2 zu steuern oder zu regeln.

Bei diesem Ausführungsbeispiel ist die Steuer- oder Regeleinheit 5 dazu ausgebildet, in Abhängigkeit der jeweiligen Funktion 6 des jeweiligen Verbrauchers 2 einen proportionalen und/oder konstanten Volumenstrom zu generieren.

Bevorzugt ist die zweite Hydraulikpumpe 3 eine Konstantpumpe mit einem konstanten Verdrängungsvolumen je Umdrehung der zweiten Hydraulikpumpe 3, wobei die Steuer- oder Regeleinheit 5 dazu ausgebildet ist, den Volumenstrom anhand der Drehzahl der zweiten Hydraulikpumpe 3 zu steuern oder zu regeln.

Bei diesem Ausführungsbeispiel ist es vorgesehen, dass die Steuer- oder Regeleinheit 5 dazu ausgebildet ist, den Volumenstrom durch wenigstens eine Funktionsanforderung an den wenigstens einen Verbraucher 2 durch eine Bedienperson zu steuern oder zu regeln. Beispielsweise kann eine Bedienperson einen Hebel eines Arbeitsfahrzeugs betätigen, um eine oder mehrere Funktion(en) 6 auszuführen, z.B. das Heben und/oder Neigen eines Gabelträgers, woraufhin der oder die zugehörigen Verbraucher 2 einen für die Funktion(en) 6 erforderlichen Volumenstrom anfordert.

Insbesondere erfolgen die Steuerung oder Regelung und die darauffolgenden Vorgänge in Echtzeit, d.h. insbesondere unmittelbar infolge der wenigstens einen Funktionsanforderung.

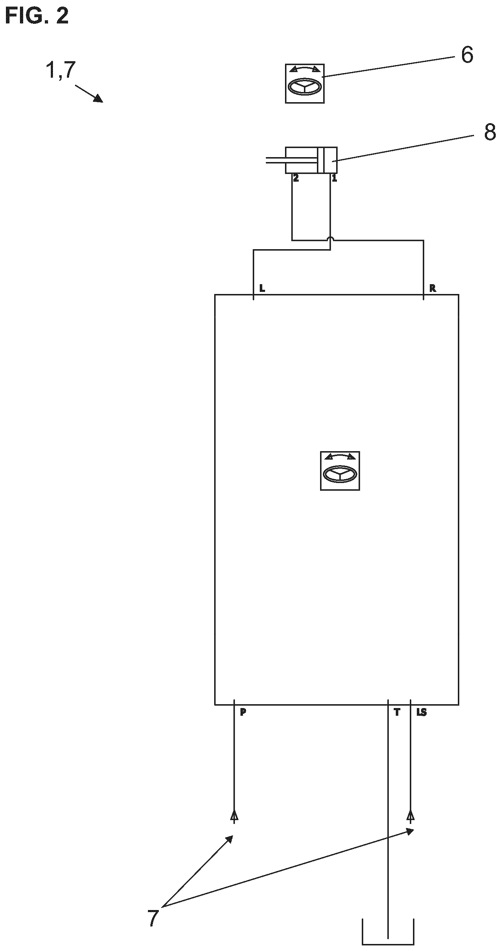

In Fig. 1 ist als bevorzugte Variante angrenzend an die zweite Hydraulikpumpe 3 ein Ventil 13 angeordnet, ausgehend von welchem ein Primärverbraucher 8 (gezeigt in Fig. 2) vorgesehen ist, vorzugsweise wobei der Primärverbraucher 8 dem wenigstens einen Verbraucher 2 im zweiten Antriebsstrang 7 vorgeordnet ist.

Das Ventil 13 ist vorzugsweise ein Umschaltventil, insbesondere ein als Prioritäts-Ventil fungierendes Load-Sensing-Ventil, das insbesondere dazu ausgebildet ist, zu gewährleisten, dass der definierte Leistungsbedarf des Primärverbraucher 8 jedenfalls gedeckt ist.

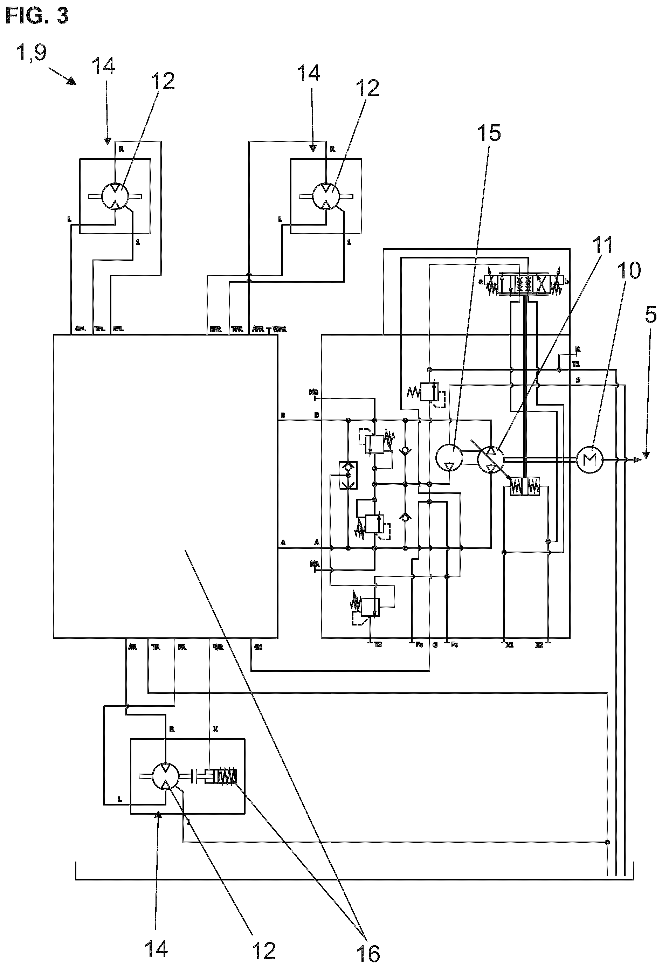

In Fig. 1 ist als bevorzugte Variante ausgehend von der Steuer- oder Regeleinheit 5 weiters eine Steuerleitung zum Elektromotor 10, vorzugsweise eines ersten Antriebsstrangs 9, gezeigt (siehe Fig. 3).

Die Fig. 2 zeigt einen zweiten Abschnitt des bevorzugten Ausführungsbeispiels eines Antriebssystems 1, wobei hier der zu Fig. 1 erwähnte Primärverbraucher 8 gezeigt ist, welcher dem wenigstens einen Verbraucher 2 im zweiten Antriebsstrang 7 vorgeordnet ist.

Bei diesem Ausführungsbeispiel ist das Antriebssystem 1 dazu ausgebildet, insbesondere mittels des Ventils 13, dem Primärverbraucher 8 eine Hydraulikfluidmenge zur Deckung des definierten Leistungsbedarfs des Primärverbrauchers 8 bereitzustellen.

Der Primärverbraucher 8 ist insbesondere ein Hydraulikzylinder für eine Lenkung, vorzugsweise wobei an dem Hydraulikzylinder eine Zahnstange zum Ausführen einer Drehbewegung vorgesehen sein kann. D.h. insbesondere, die Funktion 6 dieses Primärverbrauchers 8 stellt das Lenken des Arbeitsfahrzeugs dar.

Die Fig. 3 zeigt einen dritten Abschnitt bzw. den Hauptabschnitt des bevorzugten Ausführungsbeispiels eines Antriebssystems 1 für ein Arbeitsfahrzeug, beispielsweise Mitnahmestapler, mit wenigstens einem Rad 14, wobei das Antriebssystem 1
- eine Hydraulikpumpe 11, welche zum Antreiben des wenigstens einen Rads 14 ausgebildet ist, und
- einen mechanisch mit der Hydraulikpumpe 11 gekoppelten Elektromotor 10, welcher zum Antreiben der Hydraulikpumpe 11 ausgebildet ist,
umfasst, wobei die Hydraulikpumpe 11 eine Verstellpumpe ist.

Bei diesem bevorzugten Ausführungsbeispiel weist das Antriebssystem 1 wenigstens einen mit der Hydraulikpumpe 11 fluidverbundenen und dem wenigstens einen Rad 14 vorgeordneten Hydraulikmotor 12 auf. In Fig. 3 ist nur der wenigstens eine Hydraulikmotor 12 gezeigt; das wenigstens eine Rad 14 selbst nicht. Auf das wenigstens eine Rad 14 ist nur mittels Pfeilen hingewiesen.

Ausgehend vom Elektromotor 10 ist eine Steuerleitung gezeigt, welche mit der Steuer- oder Regeleinheit 5 (siehe Fig. 1) verbunden ist.

Die Steuer- oder Regeleinheit 5 ist insbesondere dazu ausgebildet, den zweiten Antriebsstrang 7 und den ersten Antriebsstrang 9 zu steuern oder zu regeln.

Bei diesem Ausführungsbeispiel ist die Steuer- oder Regeleinheit 5 dazu ausgebildet, den Elektromotor 10 und die Hydraulikpumpe 11, insbesondere eine Verstelleinheit wie eine Schwenkscheibe der Hydraulikpumpe 11, zu steuern oder zu regeln.

Hier ist die Steuer- oder Regeleinheit 5 weiters dazu ausgebildet, eine Drehzahl des Elektromotors 10 in einem definierten Bereich zu halten und die Hydraulikpumpe 11, insbesondere die Verstelleinheit, derart zu steuern oder zu regeln, um eine gewünschte Bewegung des wenigstens einen Rads 14 zu erzielen.

Bei diesem bevorzugten Ausführungsbeispiel ist der erste Antriebsstrang 9 ein geschlossener Hydraulikkreislauf, vorzugsweise umfassend eine Speisepumpe 15, welche dazu ausgebildet ist, einen vorgesehenen Betriebsdruck im Antriebssystem 1, vorzugsweise im ersten Antriebsstrang 9, bereitzustellen und aufrechtzuerhalten.

Bei diesem Ausführungsbeispiel ist die Speisempumpe 15 mechanisch mit der Hydraulikpumpe 11 gekoppelt.

In Fig. 3 ist weiters eine bevorzugt vorgesehene Bremseinheit 16 mit wenigstens einem Bremshydraulikzylinder gezeigt, wobei die Bremseinheit 16 dazu ausgebildet ist, wenigstens ein Rad 14 zu bremsen und/oder zu blockieren.

### Bezugszeichenliste:

- 1: Antriebssystem
- 2: Verbraucher
- 3: zweite Hydraulikpumpe
- 4: zweiter Elektromotor
- 5: Steuer- oder Regeleinheit
- 6: Funktion
- 7: zweiter Antriebsstrang
- 8: Primärverbraucher
- 9: erster Antriebsstrang
- 10: Elektromotor
- 11: Hydraulikpumpe
- 12: Hydraulikmotor
- 13: Prioritäts-Ventil
- 14: Rad
- 15: Speisepumpe
- 16: Bremseinheit

## Patentansprüche

1. Antriebssystem (1) für ein Arbeitsfahrzeug, beispielsweise Mitnahmestapler, mit wenigstens einem angetriebenen Rad (14), wobei das Antriebssystem (1)
- eine Hydraulikpumpe (11), welche zum Antreiben des wenigstens einen angetriebenen Rads (14) ausgebildet ist, und
- einen mechanisch mit der Hydraulikpumpe (11) gekoppelten Elektromotor (10), welcher zum Antreiben der Hydraulikpumpe (11) ausgebildet ist,
umfasst, **dadurch gekennzeichnet, dass** die Hydraulikpumpe (11) eine Verstellpumpe ist.

2. Antriebssystem (1) nach Anspruch 1, wobei das Antriebssystem (1) eine Steuer- oder Regeleinheit (5) aufweist, welche dazu ausgebildet ist, den Elektromotor (10) und die Hydraulikpumpe (11), insbesondere eine Verstelleinheit der Hydraulikpumpe (11), zu steuern oder zu regeln.

3. Antriebssystem (1) nach Anspruch 2, wobei die Steuer- oder Regeleinheit (5) dazu ausgebildet ist, einen durch die Hydraulikpumpe (11) generierbaren Volumenstrom des Hydraulikfluids anhand einer Drehzahl der Hydraulikpumpe (11) und/oder einem Verdrängungsvolumen je Umdrehung der Hydraulikpumpe (11) zu steuern oder zu regeln.

4. Antriebssystem (1) nach Anspruch 2 oder 3, wobei die Steuer- oder Regeleinheit (5) dazu ausgebildet ist, eine Drehzahl des Elektromotors (10) in einem definierten Bereich zu halten und die Hydraulikpumpe (11), insbesondere die Verstelleinheit, zu steuern oder zu regeln, um eine gewünschte Bewegung des wenigstens einen angetriebenen Rads (14) zu erzielen.

5. Antriebssystem (1) nach einem der vorhergehenden Ansprüche, wobei das Antriebssystem (1) wenigstens einen mit der Hydraulikpumpe (11) fluidverbundenen Hydraulikmotor (12) aufweist, welcher dazu ausgebildet ist, von der Hydraulikpumpe (11) angetrieben zu werden und das wenigstens eine angetriebene Rad (14) anzutreiben.

6. Antriebssystem (1) nach einem der vorhergehenden Ansprüche, wobei zumindest der Elektromotor (10) und die Hydraulikpumpe (11) einen ersten hydraulischen Antriebsstrang (9) zum Antreiben des wenigstens einen angetriebenen Rads (14) bilden, vorzugsweise wobei zusätzlich wenigstens zwei, beispielsweise drei oder vier, Räder (14) vorhanden sind.

7. Antriebssystem (1) nach Anspruch 6, wobei der erste Antriebsstrang (9) ein geschlossener Hydraulikkreislauf ist.

8. Antriebssystem (1) nach einem der vorhergehenden Ansprüche, wobei das Antriebssystem (1) eine, vorzugsweise mit der Hydraulikpumpe (11) mechanisch gekoppelte, Speisepumpe (15) aufweist, welche dazu ausgebildet ist, einen vorgesehenen Betriebsdruck im Antriebssystem (1), vorzugsweise im ersten Antriebsstrang (9), bereitzustellen und aufrechtzuerhalten.

9. Antriebssystem (1) nach einem der vorhergehenden Ansprüche, wobei das Antriebssystem (1), vorzugsweise der erste Antriebsstrang (9), eine Bremseinheit (16) umfasst, welche dazu ausgebildet ist, wenigstens ein angetriebenes Rad (14) zu bremsen und/oder zu blockieren.

10. Antriebssystem (1) nach einem der vorhergehenden Ansprüche, wobei das Antriebssystem (1) wenigstens einen zweiten hydraulischen Antriebsstrang (7) mit einem zweiten Elektromotor (4) und einer mit dem zweiten Elektromotor (4) mechanisch gekoppelten zweiten Hydraulikpumpe (3) aufweist, wobei die zweite Hydraulikpumpe (3) zum Antreiben wenigstens eines Verbrauchers (2) des Arbeitsfahrzeugs ausgebildet ist.

11. Antriebssystem (1) nach Anspruch 10, wobei dem wenigstens einen Verbraucher (2) im zweiten Antriebsstrang (7) ein Primärverbraucher (8) mit einem definierten Leistungsbedarf vorgeordnet ist, vorzugsweise wobei das Antriebssystem (1) dazu ausgebildet ist, mittels einer Vorrichtung zur Regelung der priorisierten Energieversorgung dem Primärverbraucher (8) eine Hydraulikfluidmenge zur Deckung des definierten Leistungsbedarfs bereitzustellen.

12. Arbeitsfahrzeug, insbesondere Mitnahmestapler, mit einem Antriebssystem (1) nach einem der vorhergehenden Ansprüche und mit wenigstens einem mit dem Antriebssystem (1) antreibbaren Rad (14).

13. Verfahren zum Betreiben eines Antriebssystems (1) nach einem der Ansprüche 1 bis 11 und/oder eines Arbeitsfahrzeugs nach Anspruch 12, wobei der Elektromotor (10) und die Hydraulikpumpe (11), insbesondere die Schwenkscheibe der Hydraulikpumpe (11), gesteuert oder geregelt werden, um das wenigstens eine angetriebene Rad (14) anzutreiben.
